# EUROPÄISCHE PATENTSCHRIFT

(11) **EP 2 329 220 B1**
(45) Veröffentlichungstag und Bekanntmachung des Hinweises auf die Patenterteilung: **12.12.2012**
(21) Anmeldenummer: 09782194.6
(22) Anmeldetag: 26.08.2009
(51) Int. Cl.: G01B 11/275

(54) **FAHRWERKSVERMESSUNGSEINRICHTUNG MIT REFERENZIEREINRICHTUNG**
CHASSIS MEASURING DEVICE WITH REFERENCING DEVICE
DISPOSITIF D'ALIGNEMENT DE CHÂSSIS AVEC DISPOSITIF DE RÉFÉRENÇAGE

(30) Priorität: 21.08.2009 DE 102009028796; 12.09.2008 DE 102008042022
(43) Veröffentlichungstag der Anmeldung: 08.06.2011
(73) Patentinhaber: Robert Bosch GmbH, 70442 Stuttgart (DE)
(72) Erfinder: MACCHIA, Adriano, 80798 Muenchen (DE); WAGMANN, Christian, 80797 Muenchen (DE); BACKES, Jochen, 80687 Muenchen (DE)
(86) Internationale Anmeldenummer: PCT/EP2009/060972
(87) Internationale Veröffentlichungsnummer: WO 2010/028946

(56) Entgegenhaltungen:
- EP-A1- 1 335 181
- EP-A2- 1 798 515
- EP-B1- 1 669 715
- DE-A1- 4 433 126
- DE-C1- 4 427 483
- US-B1- 7 313 869

## Beschreibung

Die Erfindung betrifft eine Fahrwerksvermessungseinrichtung für ein auf einem Messplatz stehendes Kraftfahrzeug mit einer Referenziereinrichtung nach dem Oberbegriff des Anspruchs 1.

Im Stand der Technik sind optische Fahrwerksvermessungseinrichtungen mit Messeinheiten und Referenziereinrichtungen bekannt, wobei die Messeinheiten Targets an den Rädern des Kraftfahrzeugs erfassen und daraus relevante Fahrwerksparameter bestimmen. Häufig wird dabei für jedes Rad eine separate Messeinheit vorgesehen, was hohe Kosten mit sich bringt. Bei der Fahrwerksvermessung auf Hebebühnen ergeben sich aufgrund des nur geringen zur Verfügung stehenden Raums zusätzliche Probleme. Mittels der Referenziereinrichtungen werden vor dem Messvorgang die Positionen der Messeinheiten in einem Messplatzbezugssystem bestimmt.

Eine derartige Fahrwerksvermessungseinrichtung ist aus EP 1 669 715 B1 bekannt, bei der vier Messeinheiten und davon je zwei an jeder Fahrzeugseite angeordnet sind. Jede der Messeinheiten verfügt über Messkameras sowie über zwei Quer-Referenziereinheiten jeweils mit einer Referenzierkamera und einer Referenziermarke. Jeweils zwei gegenüber positionierte Quer-Referenziereinheiten referenzieren sich gegenseitig, so dass damit die Position der Messeinheiten im Messplatzbezugssystem bestimmt wird.

Weitere Fahrwerksvermessungseinrichtungen mit jeweils vier Messeinheiten werden in den Dokumenten EP 1 798 515 A2, DE 44 33 126 A1, US 7313 869 B1 und DE 44 27 483 C1 gezeigt. Diese Fahrwerksvermessungseinheiten weisen zum größten Teil Messeinheiten auf die direkt an das Fahrzeugrad geschraubt werden und nicht berührungslos arbeiten.

In der EP 1335 181 A1 ist eine Fahrwerksvermessungseinrichtung mit zwei Messeinheiten gezeigt, die durch Seitenschienen am Messplatz befestigt sind.

Aufgabe der vorliegenden Erfindung ist es, eine kostengünstige, und platzsparende Fahrwerksvermessungseinrichtung mit einer robusten Referenzierung der Messeinheiten anzugeben, mit der das Fahrwerk eines Kraftfahrzeugs auf einer Hebebühne zuverlässig vermessen werden kann.

### Offenbarung der Erfindung

Die Aufgaben wird durch die kennzeichnenden Merkmals des Anspruchs 1 gelöst. Vorteilhafte Weiterbildungen ergeben sich aus den abhängigen Ansprüchen.

Bei der erfindungsgemäßen Fahrwerksvermessungseinrichtung werden nur zwei Messeinheiten benötigt. Die Messeinheiten verbleiben während der Fahrwerksvermessung in einer unveränderten, ortsfesten Position, eine aufwendige Mechanik zum Verfahren der Messeinrichtung oder einzelner Kameras entfällt somit. Dementsprechend ist die erfindungsgemäße Fahrwerksvermessungseinrichtung kostengünstig.

Des weiteren nimmt die erfindungsgemäße Fahrwerksvermessungseinrichtung nur einen geringen Raum seitlich des Messplatzes ein, wodurch sich die erfindungsgemäße Fahrwerksvermessungseinrichtung auch für den Einsatz bei Messplätzen mit beschränkten Platzkapazitäten eignet Des weiteren ist die erfindungsgemäße Fahrwerksvermessungseinrichtung auch an einer Grube einsetzbar.

Die erfindungsgemäße Fahrwerksvermessungseinrichtung weist eine Referenziereinrichtung für die linke Messeinheit und für die rechte Messeinheit auf, welche jeweils eine Quer-Referenziereinheit sowie jeweils einen ersten Neigungsgeber und einen zweiten Neigungsgeber umfassen. Mittels der Quer-Referenziereinheit wird die relative Lage der Messeinheiten zueinander bestimmt. Mittels der Neigungsgeber wird die horizontale und vertikale Lage der Messeinheiten bestimmt

Besonders vorteilhaft ist es, wenn die Referenziereinrichtungen fest in die Messeinheiten integriert sind. Dazu weist die linke Messeinheit und die rechte Messeinheit jeweils eine Trägerplatte auf, auf welcher die Quer-Referenziereinheit sowie der erste Neigungsgeber und der zweite Neigungsgeber angeordnet sind.

Eine besonders kompakte Ausbildung der Messeinheiten wird erreicht, wenn an der Trägerplatte zwei Trägerarme für die Messkameras befestigt sind, und wenn zwischen den Trägerarmen die Quer-Referenziereinheit und die Neigungsgeber auf der Trägerplatte angeordnet sind.

Der zur Verfügung stehende Bauraum der Messeinheiten wird vorteilhaft dadurch ausgenutzt, indem auf der Trägerplatte mindestens eine Schaltungsplatine einer Signalverarbeitungseinrichtung angeordnet ist, mittels welcher zumindest eine Vorverarbeitung der Signale der Quer-Referenziereinheit und/oder der Neigungsgeber durchgeführt wird.

In einer besonders flexiblen und kosteneffektiven Variante sind die Messeinheiten als mobile Einheiten ausgebildet, die grundsätzlich an verschiedenen Arbeitsplätzen zum Einsatz kommen können und bei der vorliegenden Fahrwerksvermessungseinrichtung an den Messplatz adaptiert bzw. an diesem lösbar befestigt werden können. Dadurch können die Messeinheiten auf einfache Weise an dem Messplatz positioniert werden, und sie können leicht wieder von dieser entfernt werden, um bei anderen Arbeitsplätzen zum Einsatz zu kommen.

Durch die Positionierung der Messeinheiten an der Fahrschiene zwischen den Vorder- und Hinderrädern des Fahrzeuges ist bei den Messkameras entweder gar keine oder nur eine geringe Brennweitenänderung erforderlich.

Gemäß einer Ausführungsform der Erfindung sind die linke und die rechte Messeinheit jeweils an einer Fahrschiene des Messplatzes lösbar befestigt Dabei können die linke Messeinheit und die rechte Messeinheit jeweils aus einer fest mit der Fahrschiene verbundenen Halterung und aus einer mit der Halterung verbindbaren mobilen Messeinheit gebildet sein, welche die Stereo-Messkamera-Anordnungen umfasst. Die Messeinheiten können dabei an den Fahrschienen angeordnet werden, insbesondere seitlich daran angeordnet werden und/oder an der Fahrschiene aufgesteckt werden. Ebenso können die Messeinheiten auf dem Werkstattboden angeordnet sein.

Ein weiterer Vorteil besteht darin, dass aufgrund des Aufbaus der Messeinheiten, beide Messeinheiten (links und rechts) baugleich und dadurch austauschbar sind. Das heißt, es gibt nur eine Variante. Erst am Messplatz wird der entsprechenden Messeinheit die Position (links oder rechts) zugewiesen.

Bei der Fahrwerksvermessungseinrichtung werden an dem auf einem Messplatz stehenden Kraftfahrzeugs an den Rädern zunächst Targets derart angebracht, dass die Targets in einem Winkel zur Felgenebene angeordnet sind, dann werden die linke und die rechte Messeinheit seitlich an dem Messplatz jeweils zwischen dem Target des Vorderrads und dem Target des Hinterrads so angebracht, dass die Messkameras der nach vorn gerichteten ersten Stereo-Messkamera-Anordnung das Target des Vorderrads und die Messkameras der nach hinten gerichteten zweiten Stereo-Messkamera-Anordnung das Target des Hinterrads im Blickfeld haben. Dieser Schritt des Anbringens der linken und der rechten Messeinheit kann entfallen, wenn sich die Messeinheiten bereits an dem Messplatz befinden. Dann werden die Targets durch die Messkameras in einer ersten Targetposition aufgenommen, anschließend werden die Targets in eine zweite Targetposition bewegt, in der die Messkameras erneut eine Aufnahme der Targets durchführen. Die Messwerte beider Targetpositionen werden an eine Auswerteeinheit übermittelt, die daraus die relevanten Fahrwerksparameter bestimmt.

Vor dem eigentlichen Messvorgang oder kontinuierlich während jeder Bildaufnahme des Messvorgangs erfolgt ein Referenziervorgang für die Messeinheiten mittels der Referenziereinrichtungen, so dass der Auswerteeinheit die Lage der Messeinheiten im Messplatzbezugssystem bekannt ist Der Referenziervorgang ist erst für den Messvorgang erforderlich, da die Stereo-Kamera-Anordnungen beim Einmessvorgang unabhängig voneinander arbeiten können. Ausnahmen liegen jedoch vor, wenn die Auswertung der Bildfolge nicht radweise, sondern achsweise oder sogar mit allen vier Rädern gemeinsam erfolgt. In diesen Fällen wird der Referenziervorgang vor dem Einmessvorgang durchgeführt. In diesen Ausnahmefällen muss das Messplatzbezugssystem beim Einmessvorgang bekannt sein.

### Ausführungsbeispiel

Die Erfindung wird nachfolgend anhand eines Ausführungsbeispiels mit Bezug auf die Zeichnung näher erläutert.

Es zeigen:
Figur 1 eine Prinzipskizze einer Fahrwerksvermessungseinrichtung und
Figur 2 einen Aufbau einer Messeinheit der Fahrwerksvermessungseinrichtung.

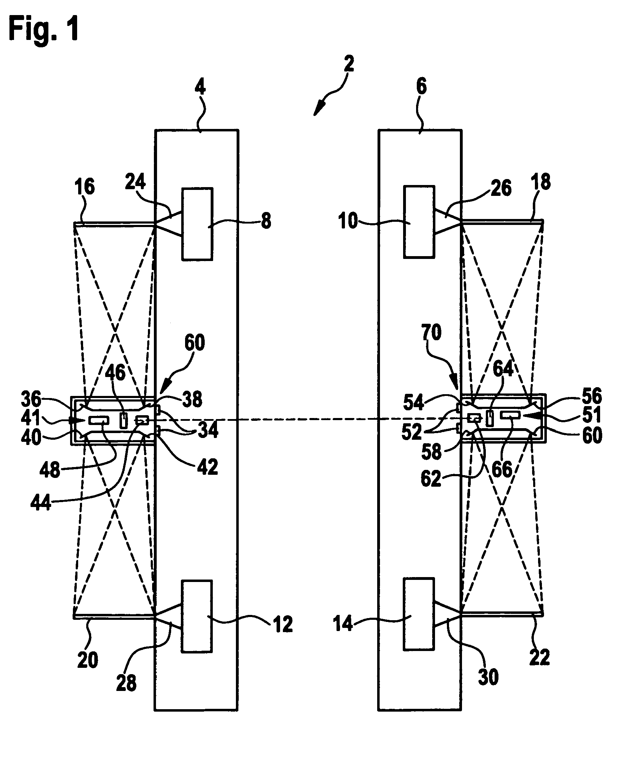

In dem vorliegenden Ausführungsbeispiel der Erfindung ist der Messplatz gemäß Figur 1 als Hebebühne 2 ausgebildet Die Hebebühne 2 umfasst dabei eine linke Fahrschiene 4 und eine rechte Fahrschiene 6, die mittels eines hier nicht gezeigten, insbesondere hydraulischen Antriebs nach oben und nach unten verfahren werden können. Auf den Fahrschienen 4 und 6 steht ein Kraftfahrzeug, von dem zur Vereinfachung der Darstellung nur die Räder 8, 10, 12 und 14 gezeigt sind. Dabei sind die Räder 8 und 10 die Vorderräder und die Räder 12 und 14 die Hinterräder des Kraftfahrzeugs.

An den Rädern sind mittels Schnellspanneinheiten 24, 26, 28 und 30 jeweils Targets 16, 18, 20 und 22 befestigt Die Targets 16 bis 22 sind scheibenförmig ausgebildet und nach außen gerichtet. In der Perspektivdarstellung der Figur verläuft die Haupterstreckungsrichtung der Targets in einer senkrechten Ebene, die durch die Drehachse der Räder 8, 10, 12 und 14 verläuft.

Mittels Befestigungsadaptern 34 ist eine linke Messeinheit 60 an der linken Fahrschiene 4 an einer bezogen auf die Längsrichtung etwa mittigen Position befestigt und erstreckt sich von der Fahrschiene 4 nach außen. Ebenso ist eine rechte Messeinheit 70 mittels Befestigungsadaptern 52 an der rechten Fahrschiene 6 befestigt und erstreckt sich von der rechten Fahrschiene 6 nach außen. Die linke Messeinheit 60 verfügt über eine äußere, nach vorn gerichtete Messkamera 36, über eine innere, nach vorn gerichtete Messkamera 38, über eine äußere, nach hinten gerichtete Messkamera 40 und über eine innere, nach hinten gerichtete Messkamera 42. Die Blickfelder der Kameras 36 bis 42 sind in der Figur durch gepunktete Linien dargestellt. Dabei ist zu erkennen, dass das Blickfeld der nach vorne gerichteten Kameras 36 und 38 jeweils so bemessen ist, dass das vordere linke Target 16 vollständig darin liegt Analog dazu ist das Blickfeld der nach hinten gerichteten Kameras 40 und 42 so bemessen, dass das hintere linke Target 20 vollständig darin liegt. Die Messkameras 36, 38 bilden eine nach vorn gerichtete erste Stereo-Messkamera-Anordnungund die Messkameras 40, 42 eine nach hinten gerichtet zweite Stereo-Messkamera-Anordnung.

In entsprechender Weise umfasst die rechte Messeinheit 70 eine innere, nach vorne gerichtete Messkamera 54, eine äußere, nach vorne gerichtete Messkamera 56, eine innere, nach hinten gerichtete Messkamera 58 und eine äußere, nach hinten gerichtete Messkamera 60. Das Blickfeld der nach vorne gerichteten Messkameras 54 und 56 ist so bemessen, dass das vordere rechte Target 18 vollständig darin liegt, und das Blickfeld der nach hinten gerichteten Kameras 58 und 60 ist so bemessen, dass das hintere rechte Target 22 vollständig darin liegt. Die die Messkameras 54, 56 bilden eine nach vorgerichtete dritte Stereo-Messkamera-Anordnung und die Messkameras 58, 60 eine nach hinten gerichtete vierte Stereo-Messkamera-Anordnung.

Bei den in der Figur 1 gezeigten Messeinheiten 60 und 70 handelt es sich um mobile Messeinheiten, die mittels den Befestigungsadaptern 34 und 52 an den Fahrschienen 4 und 6 temporär befestigt und bei Bedarf wieder von diesen entfernt werden können. Die Befestigungsadapter 34 und 52 können dabei in entsprechende Aussparungen der Fahrschienen 4 und 6 eingehängt oder mit den Fahrschienen 4 und 6 verschraubt werden. Ebenso ist eine Magnetadaption oder eine Klemmlösung möglich. Prinzipiell können die Messeinheiten 60 und 70 auf jede geeignete Weise mit den Fahrschienen 4 und 6 verbunden werden. Das Vorsehen von lösbaren Verbindungen bietet den Vorteil, dass die Messeinheiten 60 und 70 leicht abgenommen und auch an anderen Arbeitsplätzen eingesetzt werden können.

In die Messeinheiten 60 und 70 ist neben den Messkameras 36, 38, 40, 42 und 54, 56, 58, 60 jeweils eine Referenziereinrichtung 41, 51 integriert. Die Referenziereinrichtungen 41, 51 verfügen über eine Quer-Referenzierungseinheit 44 und 62 sowie über einen ersten Neigungsgeber 46, 64 und einen zweiten Neigungsgeber 48, 66.

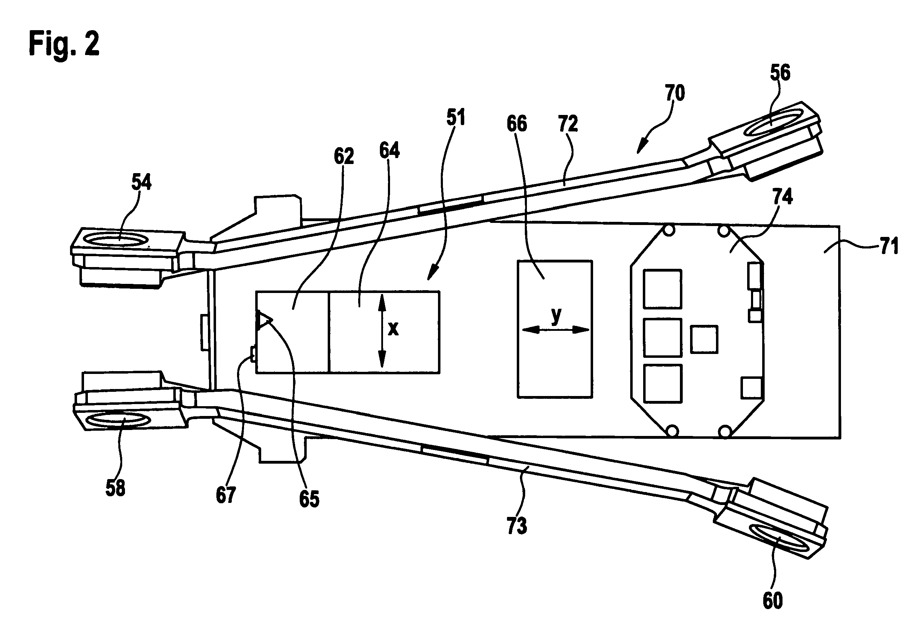

Die Quer-Referenzierungseinheiten 44 und 62 weisen gemäß Figur 2 jeweils eine Referenzierkamera 65 und jeweils eine optische Marke 67 auf. Die Referenzierkamera 65 der linken Quer-Referenziereinheit 44 erfasst die Marke 67 der rechten Quer-Referenziereinheit 62 und die Referenzierkamera 65 der rechten Quer-Referenziereinheit 62 erfasst die Marke 67 der linken Quer-Referenziereinheit 44.

Die optischen Marken 67 sind beispielweise als LED's, welche neben, unter oder über den einander gegenüberliegenden Referenzierkameras 65 angeordnet sind, wobei der Bezug zwischen der Referenzierkamera 65 und der Marke 67 der jeweiligen Quer-Referenzeinheit 44, 62 bekannt ist Die Referenzierkameras 65 der Gluer-Referenzeinheiten 44 und 62 und die gegenüberliegenden Marken 67 sind dabei so oberhalb oder unterhalb der Fahrschienen 4 und 6, jedoch auf jeden Fall unterhalb des Bodens des Kraftfahrzeugs angeordnet, dass eine ungehinderte Quer-Sichtverbindung besteht.

Mit den beiden Quer-Referenziereinheiten 44, 62 wird die relative Lage der Messeinheiten zueinander bestimmt Mittels der Neigungsgeber 46, 48, 64, 66 lässt sich eine Verkippung der Messeinheiten 60 und 70 feststellen und somit die Position der Messeinheiten 60 und 70 zur Vertikalen oder Horizontalen ermitteln, wobei mittels des ersten Neigungsgebers 46, 64 die horizontale Lage der jeweiligen Messeinheit 60, 70 in der x-Achse und mittels des zweiten Neigungsgebers 48, 66 die horizontale Lage der jeweiligen Messeinheit 60, 70 in der y-Achse bestimmt wird. Mit den Quer-Referenzeinheiten 44, 62 und den beiden Neigungsgebern 46, 48, 64, 66 wird schließlich die Position der Messeinheiten 60 und 70 in einem Messplatzbezugssystem ermittelt.

Die beiden Messeinheit 60 und 70 weisen gemäß Figur 2 jeweils eine Trägerplatte 71 auf, an der ein vorderer Trägerarm 71 für die nach vor gerichteten Messkameras 36, 38 bzw. 54, 56 und ein hinterer Trägerarm 72 für die nach hinten gerichteten Messkameras 40, 42 bzw. 58, 60 befestigt sind. Bei der Darstellung in Figur 2 handelt es sich um die rechte Messeinheit 70, so dass hierbei nur die dort dafür vorgesehen Messkameras 54, 56, 58, 60 dargstellt sind. Auf der Trägerplatte 71 ist weiterhin zwischen den Trägerarmen 72, 73 die Quer-Referenziereinheit 62, der erste Neigungsgeber 64 und der zweite Neigungsgeber 66 angeordnet Außerdem bildet die Trägerplatte 71 den Träger für eine Schaltungsplatine 74 für eine Signalverarbeitungsanordnung.

Die Fahrwerksvermessungseinrichtung verfügt des weiteren noch über eine hier nicht gezeigte Datenverarbeitungseinheit bzw. Auswerteeinheit, welche die Signale der Messkameras 36 - 42, 54 - 60, der Quer-Referenziereinheiten 44, 62 und der Neigungsgeber 46, 48, 64, 66 erhält und aus diesen Signalen das Messplatzbezugssystem und die relevanten Fahrwerksparameter bestimmt.

Der Ablauf des Verfahrens zur Fahrwerksvermessung des auf der Hebebühne 2 stehenden Kraftfahrzeugs ist nachfolgend beschrieben:

Zunächst werden die Targets 16 bis 22 mittels der Spanneinheiten 26 bis 60 an den Rädern 8 bis 14 des Kraftfahrzeugs befestigt, wie dies in der Figur dargestellt ist. Wenn die Messeinheiten 60 und 70 nicht ohnehin schon auf den Fahrschienen 4 und 6 befestigt sind, werden diese nun mittels der Befestigungsadapter 34 und 52 an den Fahrschienen 4 und 6 befestigt. Auf die Reihenfolge der Befestigung der Targets 16 bis 22 und der Messeinheiten 60 und 70 kommt es nicht an.

Nun wird die Bildaufnahme in einer ersten Targetposition gestartet. Die Messkameras 36, 38 erzeugen jeweils ein Bild des vorderen linken Targets 16, die Messkameras 40 und 42 erzeugen jeweils ein Bild des hinteren linken Messtargets 20, die Messkameras 54 und 46 erzeugen jeweils ein Bild des vorderen rechten Messtargets 18 und die hinteren Messkameras 58 und 60 erzeugen jeweils ein Bild des hinteren rechten Messtargets 22. Nun wird das Kraftfahrzeug auf den Fahrschienen 4 und 6 beispielsweise um eine Achteldrehung der Räder 8 bis 14 verschoben, anschließend erfolgt in dieser zweiten Targetposition eine erneute Bildaufnahme der Targets 16 bis 22 durch die Messkameras 36 bis 42 und 54 bis 60.

Die Referenzierkameras 65 machen synchron zu der Aufnahme der Messkameras 36 - 42, 54 - 60 eine Aufnahme der jeweils gegenüberliegenden optischen Marke 67 der Messeinheit 60, 70. Die Neigungsgeber 46, 48, 64, 66 liefern zusätzliche Ausgangssignale, die repräsentativ für die Verkippung der Messeinheiten 60 und 70 sind.

Der Auswerteeinheit werden die Messergebnisse der Messkameras 36 - 42, 54 - 60, der Referenzkameras 65 und der Neigungsgeber 46, 48, 64, 66 übermittelt, wobei beispielsweise die Messergebnisse der Referenzierkameras 65 und/oder der Neigungseber 46, 48, 64, 66 in der Signalverarbeitungseinrichtung, die auf der Schaltungsplatine 74 untergebracht ist, vorverarbeitet werden. Die Auswerteeinheit bestimmt schließlich die Position der Messeinheiten 60, 70 im Messplatzbezugessystem und ermittelt dann die relevanten Fahrwerksparameter in einer dem Fachmann prinzipiell bekannter Weise anhand der Messsignale der Messkameras 36, 38, 40, 41 und 54, 56, 58, 60 mittel eines optischen Auswertungsverfahrens.

Erfahrungsgemäß ist die Aufnahme der Targets in zwei Targetpositionen zur Ermittlung der relevanten Fahrwerksparameter ausreichend. Die Genauigkeit der ermittelten Fahrwerksparameter kann durch die Aufnahme von drei oder noch mehr Targetpositionen noch weiter gesteigert werden.

Prinzipiell ist auf den scheibenförmigen Targets 16 bis 22 die Anordnung eines beliebigen Musters ausreichend, wobei zur Festlegung eines Maßstabs der Abstand zwischen zwei Marken auf dem Target oder der Abstand einer Marke zu einer Bezugsebene bekannt sein muss. Die übrigen Marken können unbestimmt sein, und es reichen bereits zwei unbestimmte Marken aus, damit die Auswerteeinheit erfindungsgemäß aus den erhaltenen Daten die relevanten Fahrwerksparameter ermitteln kann.

Alternativ zur Verschiebung des Fahrzeugs und der sich damit ergebenden Drehung der Targets 16 bis 22 können diese auch direkt gegenüber den Rädern 8 bis 14, die dabei ortsfest verbleiben, gedreht werden, beispielsweise durch Verdrehung der Targets 16 bis 22 gegenüber einer entsprechenden Bohrung in der Targetaufnahme, die dabei zur Raddrehachse bekannt sein muss.

## Patentansprüche

1. Fahrwerksvermessungseinrichtung für ein auf einem Messplatz (2) stehendes Kraftfahrzeug, aufweisend
Targets (16, 18, 20, 22) zum Anbringen an den Rädern (8, 10, 12, 14) des Kraftfahrzeugs, die in einem Winkel zur Felgenebene angeordnet sind,
eine linke Messeinheit (60) und eine rechte Messeinheit (70), wobei die Messeinheiten (60, 70) jeweils seitlich an dem Messplatz (2) zwischen dem Target (16, 18) des Vorderrads (8, 10) und dem Target (20, 22) des Hinterrads (12, 14) positioniert sind, und jeweils über nach vorne gerichtete erste Messkameras (36, 38; 54, 56) und über nach hinten gerichtete zweite
Messkameras (40, 42; 58, 60) verfügen, wobei die nach vorne gerichteten ersten Messkameras (36, 38; 54, 56) jeweils das Target (16, 18) des Vorderrads (8, 10) und die nach hinten gerichteten zweiten Messkameras (40, 42; 58, 60) jeweils das Target (20, 22) des Hinterrads (12, 14) im Blickfeld haben,
und Referenziereinrichtungen (41, 51) zur Bestimmung der Position der Messeinheiten (60, 70),
**dadurch gekennzeichnet, dass** die Referenziereinrichtungen in die linke Messeinheit (60) und in die rechte Messeinheit (70) integriert sind und jeweils eine Quer-Referenziereinheit (44, 62) sowie jeweils einen ersten Neigungsgeber (46,48) und einen zweiten Neigungsgeber (64,66) umfassen, und dass die linke Messeinheit (60) und die rechte Messeinheit (70) als baugleiche und austauschbare Einheiten ausgebildet sind.

2. Fahrwerksvermessungseinrichtung nach Anspruch 1, **dadurch gekennzeichnet, dass** die linke Messeinheit (60) und die rechte Messeinheit (70) über jeweils eine fest mit der Fahrschiene (4; 6) verbundene Halterung (34; 52) verfügt.

3. Fahrwerksvermessungseinrichtung nach Anspruch 1, oder 2, **dadurch gekennzeichnet, dass** die Messkameras (36 - 42; 54 - 60) jeweils als Stereo-Messkamera-Anordnungen ausgebildet sind.

## Claims

1. Chassis measuring device for a motor vehicle in a measuring station (2), having
targets (16, 18, 20, 22) which are intended to be attached to the wheels (8, 10, 12, 14) of the motor vehicle and are arranged at an angle to the plane of the rim,
a left measuring unit (60) and a right measuring unit (70), the measuring units (60, 70) each being positioned at the side of the measuring station (2) between the target (16, 18) on the front wheel (8, 10) and the target (20, 22) on the rear wheel (12, 14) and each having forward-facing first measuring cameras (36, 38; 54, 56) and rearward-facing second measuring cameras (40, 42; 58, 60), and the forward-facing first measuring cameras (36, 38; 54, 56) respectively having the target (16, 18) on the front wheel (8, 10) in the field of view and the rearward-facing second measuring cameras (40, 42; 58, 60) respectively having the target (20, 22) on the rear wheel (12, 14) in the field of view,
and referencing devices (41, 51) for determining the position of the measuring units (60, 70),
**characterized in that** the referencing devices are integrated in the left measuring unit (60) and in the right measuring unit (70) and each comprise a cross-referencing unit (44, 62) and a first inclination sensor (46, 48) and a second inclination sensor (64, 66), and **in that** the left measuring unit (60) and the right measuring unit (70) are in the form of structurally identical and interchangeable units.

2. Chassis measuring device according to Claim 1, **characterized in that** the left measuring unit (60) and the right measuring unit (70) each have a holder (34; 52) which is permanently connected to the running rail (4; 6).

3. Chassis measuring device according to Claim 1 or 2, **characterized in that** the measuring cameras (36-42; 54-60) are each in the form of stereo measuring camera arrangements.

## Revendications

1. Dispositif d'alignement de châssis pour un véhicule automobile positionné sur un poste de mesure (2), présentant
des cibles (16, 18, 20, 22) devant être montées sur les roues (8, 10, 12, 14) du véhicule automobile, qui sont disposées suivant un certain angle par rapport au plan de la jante,
une unité de mesure gauche (60) et une unité de mesure droite (70), les unités de mesure (60, 70) étant positionnées à chaque fois latéralement au niveau du poste de mesure (2) entre la cible (16, 18) de la roue avant (8, 10) et la cible (20, 22) de la roue arrière (12, 14), et disposant à chaque fois de premières caméras de mesure (36, 38 ; 54, 56) orientées vers l'avant et de deuxièmes caméras de mesure (40, 42 ; 58, 60) orientées vers l'arrière, les premières caméras de mesure (36, 38 ; 54, 56) orientées vers l'avant contenant dans leur champ de vision à chaque fois la cible (16, 18) de la roue avant (8, 10) et les deuxièmes caméras de mesure (40, 42 ; 58, 60) orientées vers l'arrière contenant dans leur champ de vision à chaque fois la cible (20, 22) de la roue arrière (12, 14), et
des dispositifs de référençage (41, 51) pour déterminer la position des unités de mesure (60, 70),
**caractérisé en ce que les** dispositifs de référençage dans l'unité de mesure gauche (60) et dans l'unité de mesure droite (70) sont intégrés et comprennent à chaque fois une unité de référençage croisée (44, 62) ainsi qu'à chaque fois un premier détecteur d'inclinaison (46, 48) et un deuxième détecteur d'inclinaison (64, 66), et **en ce que** l'unité de mesure gauche (60) et l'unité de mesure droite (70) sont réalisées sous forme d'unités de construction identique et remplaçables.

2. Dispositif d'alignement de châssis selon la revendication 1, **caractérisé en ce que** l'unité de mesure gauche (60) et l'unité de mesure droite (70) disposent à chaque fois une fixation (34 ; 52) connectée fixement au rail de roulement (4 ; 6).

3. Dispositif d'alignement de châssis selon la revendication 1 ou 2, **caractérisé en ce que** les caméras de mesure (36 - 42 ; 54 - 60) sont réalisées à chaque fois sous forme d'agencements de caméras de mesure stéréo.
